**Europäisches Patentamt**

**European Patent Office**

**Office européen des brevets**

(19)

(11) Veröffentlichungsnummer : **0 461 168 B1**

(12) **EUROPÄISCHE PATENTSCHRIFT**

(45) Veröffentlichungstag der Patentschrift :
**18.01.95 Patentblatt 95/03**

(21) Anmeldenummer : **90904272.3**

(22) Anmeldetag : **28.02.90**

(86) Internationale Anmeldenummer :
**PCT/EP90/00329**

(87) Internationale Veröffentlichungsnummer :
**WO 90/10352 07.09.90 Gazette 90/21**

(51) Int. Cl.⁶ : **H04N 7/12**

(54) **ELEKTRONISCHES BILDWIEDERGABEGERÄT.**

(30) Priorität : **03.03.89 DE 3906712**

(43) Veröffentlichungstag der Anmeldung :
**18.12.91 Patentblatt 91/51**

(45) Bekanntmachung des Hinweises auf die
Patenterteilung :
**18.01.95 Patentblatt 95/03**

(84) Benannte Vertragsstaaten :
**AT BE CH DE DK ES FR GB IT LI LU NL SE**

(56) Entgegenhaltungen :
**WO-A-87/02210**
**WO-A-87/04033**
**WO-A-88/03346**
**US-A- 4 802 005**

(56) Entgegenhaltungen :
**PROCEEDINGS OF THE IEEE, vol. 73, No. 4,
April 1985, (New York, US) E. Dubois: "The
sampling and reconstruction of time-varying
imagery with application in video system",
pages 502-522**
**Report to a seminar at the "Institute of Technology" (M.I.T.) (Cambridge, Massachusetts,
US) 9-13 October 1988 "Club de Rennes
Young Researchers" - Seminar, F. Vreeswijk:
"HD-MAC coding for broadcasting of high definition television signals", pages 1-20**

(73) Patentinhaber : **DEUTSCHE
THOMSON-BRANDT GMBH
Hermann-Schwer-Strasse 3
D-78048 Villingen-Schwenningen (DE)**

(72) Erfinder : **HARTNACK, Wolfgang
Zilleweg 14A
D-3167 Burgdorf (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 461 168 B1

## Beschreibung

Die Erfindung betrifft ein elektronisches Bildwiedergabegerät für digitale Videosignale.

Bei der geplanten Ausstrahlung von HDTV-Fernsehsignalen (HDTV, high definition television) nach dem HDMAC-Verfahren (HDMAC, high definition multiplexed analogue components) ist eine bewegungsadaptive Signalverarbeitung vorgesehen. Die Signalverarbeitung (hohe Auflösung in unbewegten Bildbereichen oder niedrige Auflösung in bewegten Bildbereichen) ist innerhalb jedes Videosignal-Blocks von z.B. 16 mal 16 Bildpunkten einheitlich (Technical papers IBC 1988, Brighton, GB, Seiten 70-73). Die Bildpunkte eines solchen Videosignal-Blocks sind innerhalb jedes Videosignal-Blocks als zu der jeweiligen Blockart zugehörig gekennzeichnet durch ein DATV-Signal (DATV, digital assisted television), das als Zusatzinformation zum Fernsehsignal übertragen wird und noch weitere Informationen, z.B. Bewegungsvektoren, enthält. Die Zahlenwerte der wiederzugebenden Bildpunkte werden auf zwei oder mehr verschiedene Arten entsprechend den Berechnungsvorschriften für die verschiedenen Blockarten ermittelt. Durch eine verschiedenartige Signalverarbeitung innerhalb der Blöcke sind die Bildeigenschaften in den Blöcken, z.B. die Bildschärfe, unterschiedlich. In einem HDTV-Fernsehempfänger werden bei relativ hohem Aufwand mit Hilfe der bewegt/unbewegt-Information und der Bewegungsvektoren aus diesem DATV-Signal die bewegten Signalblöcke bewegungskompensiert interpoliert, d.h. auch bewegte Bildteile können im Empfänger mit einer relativ hohen Auflösung rekonstruiert werden.

Es ist möglich, die Bewegungsvektoren nicht auszuwerten, sondern nur die bewegt/unbewegt-Information. Entsprechend werden bei einem solchen Gerät die Bildpunkte in bewegten Videosignal-Blöcken im Halbbild interpoliert mit niedriger Auflösung und in unbewegten Videosignal-Blöcken im Vollbild mit hoher vertikaler Auflösung. Dadurch werden auch einfache Geräte ermöglicht.

Bei Bildinhalten mit feinem und teilweise bewegtem Detail oder bei verrauschtem Bildsignal können dann aber bewegt/unbewegt-Blockgrenzen störend sichtbar werden.

In WO-A-8704033 werden Bildpunkt-Blöcke entweder mit hoher oder mit niedriger Genauigkeit codiert übertragen und in einem Empfänger decodiert. Die Bildpunkte von Blöcken mit niedriger Genauigkeit werden aus dem Mittelwert des Blocks und aus Mittelwerten der benachbarten Blöcke interpoliert. In WO-A-8803346 wird ein einen Pufferfüllstand im Coder repräsentierender Wert mitübertragen. Abhängig von diesem Pufferfüllstand wird die Stärke einer Bildfenster-Filterung gesteuert. Durch diese blocküberlappende Tiefpaß-Filterung können störend sichtbare Blockgrenzen bei höherem Pufferfüllstand auf Kosten der Bildschärfe verwischt werden.

Der Erfindung liegt die Aufgabe zugrunde, bei einem elektronischen Bildwiedergabegerät, z.B. einem Fernsehempfangsgerät, die Sichtbarkeit von Blockgrenzen unabhängig von Regelwerten in einem Coder und unter Beibehaltung der Bildschärfe zu vermindern.

Diese Aufgabe wird durch die im Patentanspruch 1 angegebenen Merkmale gelöst. Vorteilhafte Weiterbildungen der Erfindung ergeben sich aus den Unteransprüchen.

Im Prinzip besteht die Erfindung darin, daß bei einem elektronischen Bildwiedergabegerät ein Blockgrenzen-Weichzeichner eingesetzt wird. In einem solchen Blockgrenzen-Weichzeichner werden die Zahlenwerte der an andere Blöcke angrenzenden Bildpunkte in allen Videosignal-Blöcken parallel für den bewegten und unbewegten Fall berechnet. Für den Zahlenwert von Bildpunkten eines Blocks, die einem anderen Block direkt benachbart sind, kann nun das arithmetische Mittel der beiden Zahlenwerte eingesetzt werden, die für den jeweiligen Bildpunkt für den bewegten Fall und den unbewegten Fall berechnet wurden. Dieses kann an den horizontalen und/oder vertikalen Blockgrenzen geschehen. Die Verschiedenheit der Bildschärfe in benachbarten unterschiedlichen Blockarten wirkt dadurch nicht so störend.

Die Zusammensetzung der Bildpunkt-Zahlenwerte aus jeweils bewegt und unbewegt berechneten Bildpunktanteilen kann auch auf mehr als eine an einen benachbarten Block angrenzende Zeile und/oder Spalte ausgedehnt werden.

Für Videosignale, die im Halbbildverfahren (Interlace) übertragen werden, können zur Rekonstruktion von als bewegt gekennzeichneten Bildpunkt-Blöcken Bildpunkte aus einem Halbbild herangezogen werden. Für Videosignal-Blöcke, die als unbewegt gekennzeichnet sind, können dagegen Bildpunkte aus zwei aufeinanderfolgenden Halbbildern herangezogen werden.

Innerhalb eines Blockes von z.B. 16 mal 16 Bildpunkten können aber sowohl bewegte als auch unbewegte Bildpunkte enthalten sein. Die Wiedergabe von unbewegten Bildpunkten in einem als bewegt gekennzeichneten Block resultiert z.B. nur in einer geringen vertikalen Unschärfe dieser Bildpunkte. Die Unschärfe ist an die Unschärfe der bewegten Bildpunkte in diesem Block angepaßt und wird kaum als störend empfunden. Dagegen führt die Wiedergabe von bewegten Bildpunkten in einem als unbewegt gekennzeichneten Block zu deutlicher horizontaler Unschärfe und Doppelkonturen bewegter Kanten. Darum kann es vorteilhaft sein, nur in als unbewegt gekennzeichneten Blöcken eine Zusammensetzung bewegt und unbewegt berechneter Bild-

2

punkt-Zahlenwertanteile an den Blockrändern gemäß den Unteransprüchen durchzuführen.

Nachstehend wird ein Ausführungsbeispiel der Erfindung anhand der Zeichnungen erläutert. Diese zeigen in

Fig. 1    Blockdiagramm eines elektronischen Bildwiedergabegeräts mit einem Blockgrenzen-Weichzeichner

Fig. 2    Bildpunkt-Blöcke mit korrigierten Bildpunkten

Fig. 3    Bildpunkt-Block mit verbesserter Korrektur

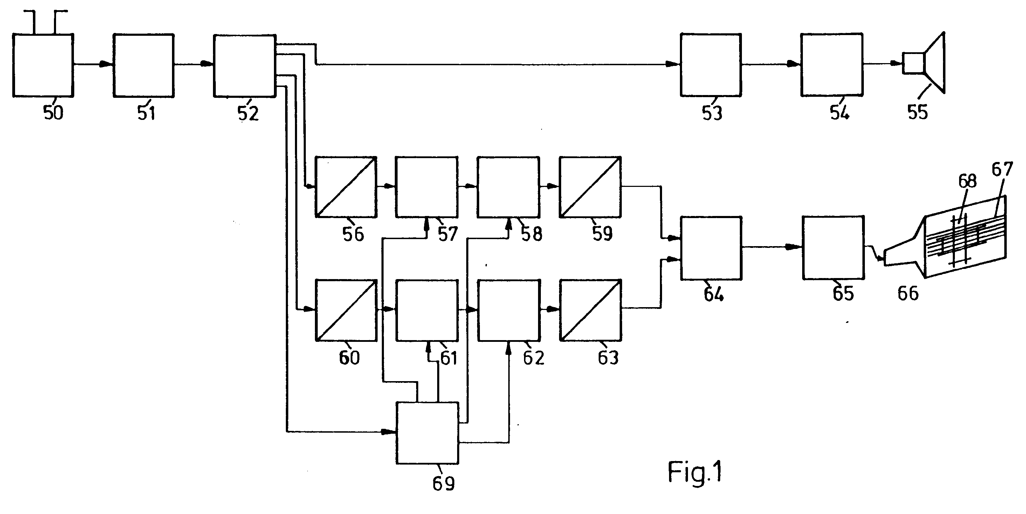

Fig. 1 zeigt einen Fernsehgeräte-Tuner 50, einen ZF-Verstärker 51 und einen Demodulator 52, der ein Audiosignal, ein Luminanzsignal, ein Chrominanzsignal und ein DATV-Signal bereitstellt. Diese Signale werden z.B. sequentiell übertragen.

Das Audiosignal wird in Schaltung 53 verarbeitet, in Schaltung 54 verstärkt und zum Lautsprecher 55 weitergeleitet.

Das DATV-Signal wird in Schaltung 69 verarbeitet, die eine blockweise bewegt/unbewegt-Information für die Schaltungen 57 und 61 sowie die Blockgrenzen-Weichzeichner 58 und 62 erzeugt und diesen zuführt.

Das Luminanzsignal wird im A/D-Wandler 56 digitalisiert, in Schaltung 57 digital verarbeitet, im Blockgrenzen-Weichzeichner 58 variiert und im D/A-Wandler 59 in analoger Form bereitgestellt.

Das Chrominanzsignal wird im A/D-Wandler 60 digitalisiert, in Schaltung 61 digital verarbeitet, im Blockgrenzen-Weichzeichner 62 variiert und im D/A-Wandler 63 in analoger Form bereitgestellt. Der Blockgrenzen-Weichzeichner 62 kann für das Chrominanzsignal unter Umständen auch entfallen.

Die Luminanz- und die Chrominanzsignale aus den D/A-Wandlern 59 und 63 werden in einer Matrix 64 in RGB-Signale umgeformt und über den RGB-Verstärker 65 der Bildröhre 66 zugeführt. Auf der Bildröhre 66 sind Fernsehzeilen 67 und Bildpunktblöcke 68 dargestellt.

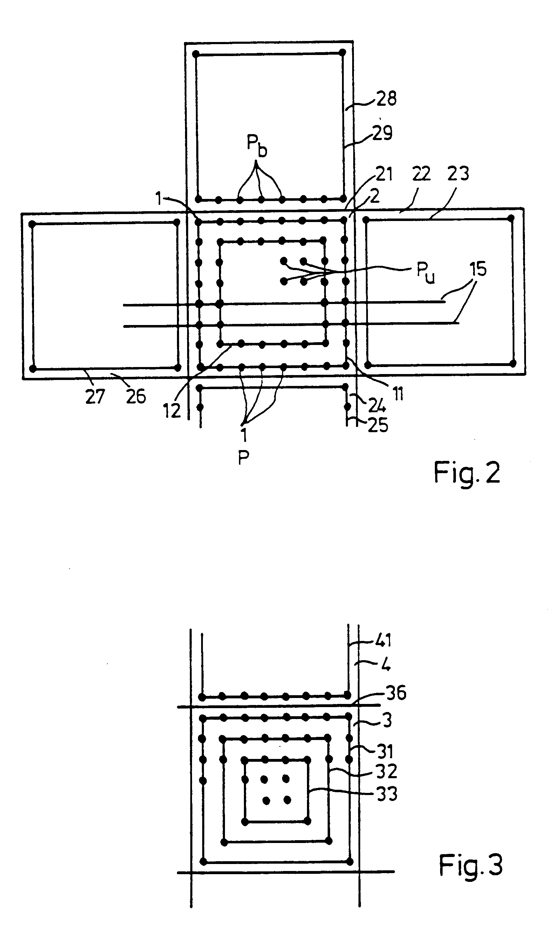

Fig. 2 zeigt fünf Videosignal-Blöcke 2, 22, 24, 26 und 28 eines entsprechend empfangenen Fernsehbildes mit einer Blockgröße von z.B. je acht mal acht Bildpunkten, die auf den Zeilen 15 eines Videosignals liegen. Es ist nur ein Teil der Bildpunkte dargestellt. Der Block 2 entspricht beispielsweise einem durch das DATV-Zusatzsignal als unbewegt gekennzeichneten Block. Er hat eine Anzahl von direkt an die benachbarten Blöcke 22, 24, 26 und 28 angrenzenden Bildpunkten 1 bzw. P, die ringförmig angeordnet sind. Diese Anordnung sei im folgenden als Ring 11 bezeichnet. Die Ringe nehmen die Randform des Blocks an, zu dem sie gehören.

Die Bildpunkte auf Ring 12 und die weiter innen liegenden Bildpunkte von Block 2 werden als unbewegt berechnet, bzw. einfach aus zwei aufeinanderfolgenden Halbbildern des Videosignals zusammengesetzt.

Unbewegte Bildpunkte weisen Abtastwerte Pu auf, bewegte Bildpunkte Abtastwerte Pb. Im Empfänger an den Blockgrenzen wiedergegebene Bildpunkte weisen Abtastwerte P bzw. 1 auf.

Die Zahlenwerte P der Bildpunkte auf Ring 11 werden aus dem jeweiligen Zahlenwert Pu des entsprechenden als unbewegt berechneten Bildpunktes und dem Zahlenwert Pb des gleichen, aber als bewegt berechneten Bildpunktes zusammengesetzt:

$$P = (Pu + Pb)/2$$

Entsprechend wird für die Bildpunkte auf den Ringen 23, 25, 27 und 29 verfahren.

Fig. 3 zeigt einen Bildschirmausschnitt mit verbesserter Weichzeichnung der Blockgrenzen 36. Der Block 4 ist als bewegt gekennzeichnet. Alle Bildpunkte, auch die auf Ring 41, werden als bewegt berechnet. Der Block 3 ist als unbewegt gekennzeichnet. Nun können die Bildpunkte auf Ring 32 nach der Formel P = (Pu + Pb)/2 berechnet werden. Die Zahlenwerte P der Bildpunkte auf Ring 31 können nach der Formel P = (Pu + 3*Pb)/4 berechnet werden und die Zahlenwerte P der Bildpunkte auf Ring 33 nach der Formel

$$P = (3*Pu + Pb)/4.$$

Die weiter im Inneren des Blocks 3 liegenden Bildpunkte können alle als unbewegt berechnet werden.

Die Anzahl der Ringe mit nach einer der genannten Formeln berechneten Bildpunkten kann je nach Größe des Unterschieds zwischen bewegt und unbewegt berechneten Bildpunkten-Zahlenwerten variiert werden. Auch die Zahlen in den obengenannten Formeln können andere Werte annehmen, doch bietet sich eine Berechnung mit Zahlenwerten an, die durch digitale add- und shift-Operationen ausgeführt werden können.

Begriffs-Definitionen :

- Bildpunkt
  Abtastwert eines analogen oder digitalen Videosignals. Die Abtastwerte sind in digitaler Form PCM-kodiert (puls code modulation).
- Bildpunkt-Zahlenwert, Zahlenwert eines Bildpunktes Eine in einem Zahlenwert ausgedrückte Helligkeits- oder Farb-Information für den Abtastwert eines Bildpunktes. Der Zahlenwert kann in einem Bereich von z.B. O bis 255 liegen.
- Block, Videosignal-Block

Ein aus mehreren benachbarten Bildpunkten zusammengefasster Ausschnitt eines Fernsehbildes. Dieser Bildausschnitt kann z.B. die Form eines Quadrats, eines Rechtecks oder einer Raute haben. Im Fall eines Quadrats kann der Block z.B. aus 16 untereinanderliegenden Fernsehzeilen-Abschnitten bestehen, wobei jeder Zeilenabschnitt 16 Bildpunkt-Abtastwerte enthält.

- Blockgrenze

Eine gedachte Begrenzungslinie, die einen Block nach außen zu den benachbarten Blöcken hin begrenzt.

- Blockrand

Die Menge der Bildpunkte, die direkt an einer Blockgrenze liegen und nicht durch andere Bildpunkte von der Blockgrenze getrennt sind.

- Berechnungsvorschrift

Eine Vorschrift, nach der die Zahlenwerte der wiedergegebenen Bildpunkte aus Zahlenwerten von empfangenen Bildpunkten gebildet werden.

- Berechnungsart

Eine von zwei oder mehr vorhandenen Berechnungsvorschriften.

- Blockart

Eine von zwei oder mehr vorhandenen Typen von Blöcken. Die Zahlenwerte aller Bildpunkte in einem solchen Block werden zunächst nach einer zu der jeweiligen Blockart zugehörigen Berechnungsvorschrift gebildet.

- Bildpunktanteil

Für einen wiederzugebenden Bildpunkt werden Zwischen-Zahlenwerte nach verschiedenen Berechnungsvorschriften gebildet. Der tatsächliche Zahlenwert des wiederzugebenden Bildpunktes wird aus prozentualen Anteilen der verschiedenen Zwischen-Zahlenwerte zusammengesetzt.

- Mischverhältnis der Zahlenwerte

Das Verhältnis der prozentualen Anteile.

Beispiel: 75% Anteil nach Berechnungsart A, 25% Anteil nach Berechnungsart B ergibt ein Mischverhältnis 3:1 .

- HDTV

High definition television, hochauflösendes Fernsehen Fernsehsignal mit erhöhter Zeilenzahl und/oder Bildpunktanzahl pro Zeile.

- DATV

Digitally assisted television, Fernsehen mit digitalem Zusatzsignal.

Ein über einen Standard-Kanal übertragenes Fernsehsignal, bei dem eine digitale Zusatzinformation mitgesendet wird, die zur Rekonstruktion des wiedergegebenen Bildes in voller Qualität notwendig ist.

- bewegungskompensiert interpolieren

Für Bildinhalte von Fernsehbildern werden Bewegungsgeschwindigkeiten und die Bewegungsrichtungen zwischen zwei Fernsehbildern ermittelt. Ein neu zu ermittelndes Zwischenbild, das zeitlich zwischen den bereits vorhandenen Fernsehbildern erzeugt werden soll, kann damit ohne solche Störungen gebildet werden, die normalerweise durch Bewegung im Bild verursacht werden.


## Patentansprüche

1. Elektronisches Bildwiedergabegerät für digitale Videosignale, bei dem Bildpunkte der Videosignale zu Blöcken zusammengefaßt sind, wobei die Blöcke von benachbarten Blöcken durch Blockränder getrennt sind und die Blöcke ein Raster bilden und wobei es eine erste Blockart für Blöcke mit im wesentlichen statischem Bildinhalt und mindestens eine zweite Blockart gibt und eingangsseitig die Bildpunkte für jeden Block als entweder zu der ersten oder zu einer der weiteren Blockarten zugehörig festgelegt sind, **gekennzeichnet** durch:
    - die zweite und eventuelle weitere Blockarten haben im wesentlichen dynamischen Bildinhalt;
    - jeder der Blöcke ist unabhängig von seiner eingangsseitig angegebenen Blockart und unabhängig von Information aus räumlich oder zeitlich benachbarten Blöcken für eine Wiedergabe entsprechend der ersten Blockart und entsprechend mindestens einer der weiteren Blockarten auswertbar;
    - zur Bildung von Wiedergabe-Bildpunkten an Blockrändern werden Bildpunkt-Werte nach zwei verschiedenen Berechnungsvorschriften - nämlich entsprechend der jeweils festgelegten Blockart und entsprechend der Blockart des jeweils benachbarten Blocks - im Bildwiedergabegerät berechnet und die jeweils nach diesen beiden Berechnungsvorschriften erhaltenen Werte kombiniert, um den Wert für einen tatsächlich wiedergegebenen Bildpunkt zu erhalten.

2. Elektronisches Bildwiedergabegerät nach Anspruch 1, **dadurch gekennzeichnet**, daß die Kombination eine arithmetische Mittelung ist.

3. Elektronisches Bildwiedergabegerät nach Anspruch 1 oder 2, **dadurch gekennzeichnet,** daß für einen Teil der Wiedergabe-Bildpunkte an einem Blockrand nur der Wert des entsprechenden Bildpunkts verwendet wird, der der jeweils festgelegten Blockart entspricht.

4. Elektronisches Bildwiedergabegerät nach Anspruch 3, **dadurch gekennzeichnet**, daß der Teil jeweils horizontale oder vertikale Blockränder in einem Block umfaßt.

5. Elektronisches Bildwiedergabegerät nach einem oder mehreren der Ansprüche 1 bis 4, **dadurch gekennzeichnet,** daß für die im Inneren des jeweiligen Blocks liegenden Wiedergabe-Bildpunkte nur die Werte der entsprechenden Bildpunkte verwendet werden, die der jeweils festgelegten Blockart entsprechen, und daß der Einfluß desjenigen der beiden Werte, der der Blockart des jeweils benachbarten Blocks entspricht, vom Blockrand zum Blockinneren hin abnimmt.

6. Elektronisches Bildwiedergabegerät nach Anspruch 5, **dadurch gekennzeichnet,** daß Wiedergabe-Bildpunkte in den Blöcken mit dynamischen Bildinhalt aus entsprechenden Werten von Bildpunkten eines Halbbildes und daß Wiedergabe-Bildpunkte in den Blöcken mit statischem Bildinhalt aus entsprechenden Werten von Bildpunkten zweier benachbarter Halbbilder ermittelt werden.

7. Elektronisches Bildwiedergabegerät nach Anspruch 6, **dadurch gekennzeichnet,** daß in den Blöcken mit dynamischen Bildinhalt alle Wiedergabe-Bildpunkte des jeweiligen Blocks nur entsprechend der für diese Blockart geltenden Berechnungsvorschrift wiedergegeben werden.

## Claims

1. An electronic picture reproduction device for digital video signals, in which the picture points of the video signals are combined into blocks, wherein the blocks are separated from neighbouring blocks by block edges and the blocks form a raster, and wherein there is one type of block for blocks with substantially static picture content and at least a second type of block, and at the input the picture points for each block are determined as belonging to either the first or to one of the further types of block, characterised in that: the second and possibly further types of block have substantially dynamic picture content;
each of the blocks can be evaluated independently of the type of block allocated to it upon input and independently of information concerned with spatially or temporally neighbouring blocks so that it can be reproduced corresponding to the first type of block and corresponding to at least one of the other types of block;
for generating the reproduction picture points at the block edges, the picture point values are calculated in the picture reproduction device according to two different calculation rules - namely corresponding to the specified picture type and corresponding to the picture type of the neighbouring block - and the values received according to these two calculation rules are combined in order to obtain the value for the picture point actually reproduced.

2. An electronic picture reproduction device according to claim 1, characterised in that the combination is an arithmetic averaging.

3. An electronic picture reproduction device according to claim 1 or 2 characterised in that for a part of the reproduction picture points at the block edge only the value of the corresponding picture point is used which corresponds to the then specified block type.

4. An electronic picture reproduction device according to claim 3, characterised in that the part includes the respective horizontal or vertical block edges in a block.

5. An electronic picture reproduction device according to one or more of claims 1 to 4, characterised in that for the reproduction picture points lying in the inside of the particular block only the values of the corresponding picture points are used which correspond to the particular block type, and that the influence of that of the two values which corresponds to the block type of the respective neighbouring block reduces from the block edge towards the block inside.

6. An electronic picture reproduction device according to claim 5, characterised in that the reproduction picture points in the blocks with dynamic picture content is calculated from the corresponding values of the picture points of one frame, and the reproduction picture points in the blocks with static picture content are calculated from the values of picture points of two neighbouring frames.

7. An electronic picture reproduction device according to claim 6, characterised in that in the blocks with dynamic picture content all reproduction picture points of the particular block are reproduced only according to the calculation rule valid for this type of block.

**Revendications**

1. Appareil de reproduction d'images électronique pour des signaux vidéo numériques dans lequel des points d'image des signaux vidéo sont réunis en blocs, les blocs étant séparés des blocs voisins par des bords de blocs et les blocs formant une grille, cependant qu'il y a un premier type de bloc pour des blocs avec un contenu d'image essentiellement statique et au moins un second type de bloc et que du côté de l'entrée les points d'image sont fixés pour chaque bloc comme appartenant soit au premier, soit à l'un des autres types de bloc, **caractérisé** par:
   - le second et d'éventuels autres types de blocs ont un contenu d'image essentiellement dynamique ;
   - chacun des blocs peut être exploité indépendamment de son type de bloc indiqué du côté de l'entrée et indépendamment de l'information de blocs voisins dans l'espace ou dans le temps pour une reproduction conformément au premier type de bloc et conformément à au moins l'un des autres types de blocs ;
   - pour former des points d'image de reproduction sur les bords des blocs, des valeurs de points d'image sont calculées dans l'appareil de reproduction d'images selon deux prescriptions de calcul différentes - à savoir conformément au type de bloc respectivement fixé et conformément au type de bloc du bloc respectivement voisin - et les valeurs obtenues respectivement selon ces deux prescriptions de calcul sont combinées pour obtenir la valeur pour un point d'image effectivement reproduit.

2. Appareil de reproduction d'images électronique selon la revendication 1, **caractérisé en ce** que la combinaison est une formation de moyenne arithmétique.

3. Appareil de reproduction d'images électronique selon la revendication 1 ou 2, **caractérisé en ce** que pour une partie des points d'image de reproduction sur un bord de bloc seule la valeur du point d'image correspondant, qui correspond au type de bloc respectivement fixé, est utilisée.

4. Appareil de reproduction d'images électronique selon la revendication 3, **caractérisé en ce** que la partie comprend respectivement des bords de bloc horizontaux ou verticaux dans un bloc.

5. Appareil de reproduction d'images électronique selon l'une ou plusieurs des revendications 1 à 4, **caractérisé en ce** que pour les points d'image de reproduction qui se situent à l'intérieur du bloc respectif seules les valeurs des points d'image correspondant sont utilisées qui correspondent au type de bloc respectivement fixé et que l'influence de celle des deux valeurs qui correspond au type de bloc du bloc respectivement voisin diminue du bord du bloc vers l'intérieur du bloc.

6. Appareil de reproduction d'images électronique selon la revendication 5, **caractérisé en ce** que des points d'image de reproduction sont déterminés dans les blocs avec un contenu d'image dynamique à partir des valeurs correspondantes de points d'image d'une trame et que des points d'image de reproduction sont déterminés dans les blocs avec contenu d'image statique à partir de valeurs correspondantes de points d'image de deux trames voisines.

7. Appareil de reproduction d'images électronique selon la revendication 6, **caractérisé en ce** que dans les blocs avec contenu d'image dynamique tous les points d'image de reproduction du bloc respectif ne sont reproduits que selon la prescription de calcul valable pour ce type de bloc.

Fig.1

Fig. 2

Fig. 3